# FASCICULE DE BREVET EUROPEEN

(11) **EP 3 832 340 B1**
(45) Date de publication et mention de la délivrance du brevet: **14.10.2026**
(21) Numéro de dépôt: 20203088.8
(22) Date de dépôt: 21.10.2020
(51) Int. Cl.: G01S 7/41, G01S 7/292, G01S 13/89

(54) **PROCEDE DE DETERMINATION DU SEUIL DE DETECTION D'UN RADAR ADAPTE A UN ENVIRONNEMENT DONNE**
VERFAHREN ZUR BESTIMMUNG EINE AN EINE BESTIMMTE UMGEBUNG ANGEPASSTEN ERKENNUNGSSCHWELLE EINES RADARS
METHOD FOR DETERMINING THE THRESHOLD FOR RADAR DETECTION ADAPTED TO A GIVEN ENVIRONMENT

(30) Priorité: 06.12.2019 FR 1913836
(43) Date de publication de la demande: 09.06.2021
(73) Titulaire: THALES, 92400 Courbevoie (FR)
(72) Inventeur: KEMKEMIAN, Stéphane, 78851 ELANCOURT (FR); CORRETJA, Vincent, 33700 MERIGNAC (FR); MACHHOUR, Sabrina, 33700 MERIGNAC (FR)
(74) Mandataire: Atout PI Laplace

(56) Documents cités:
- JAKUBIAK A: "POLISH RADAR TECHNOLOGY. ÖPART IV. SIGNAL DETECTION IN NON-GAUSSIAN CLUTTER", IEEE TRANSACTIONS ON AEROSPACE AND ELECTRONIC SYSTEMS, IEEE SERVICE CENTER, PISCATAWAY, NJ, US, vol. 27, no. 5, 1 September 1991 (1991-09-01), pages 758 - 760, XP000265635, ISSN: 0018-9251
- PENG CHEN ET AL: "A new ship detection model based multi-distributions on SAR imagery", SPIE - INTERNATIONAL SOCIETY FOR OPTICAL ENGINEERING. PROCEEDINGS, vol. 7109, 1 October 2008 (2008-10-01), US, pages 71091L, XP055697376, ISSN: 0277-786X, ISBN: 978-1-5106-3377-3, DOI: 10.1117/12.800062
- IRINA ANTIPOV: "Analysis of sea clutter data", 1 March 1998 (1998-03-01), Salisbury South Australia, XP055696543, Retrieved from the Internet <URL:https://apps.dtic.mil/dtic/tr/fulltext/u2/a348339.pdf> [retrieved on 20200518]
- DAVIDSON G ET AL: "Analysis of high-resolution land clutter - Nonlinear and non-Gaussian signal processing", IEE PROCEEDINGS: VISION, IMAGE AND SIGNAL PROCESSING, INSTITUTION OF ELECTRICAL ENGINEERS, GB, vol. 151, no. 1, 5 February 2004 (2004-02-05), pages 86 - 91, XP006021326, ISSN: 1350-245X, DOI: 10.1049/IP-VIS:20040303
- BLACKNELL D: "Comparison of parameter estimators for K-distribution", IEE PROCEEDINGS: RADAR, SONAR & NAVIGATION, INSTITUTION OF ELECTRICAL ENGINEERS, GB, vol. 141, no. 1, 1 February 1994 (1994-02-01), pages 45 - 52, XP006002061, ISSN: 1350-2395, DOI: 10.1049/IP-RSN:19949885

## Description

La présente invention concerne un procédé de détermination du seuil de détection adapté à un environnement donné, elle s'applique notamment pour les radars de surveillance dotés d'un mode de détection air/mer. L'invention est par exemple destinée aux radars aéroportés.

Plus la résolution en distance est élevée (fine) et plus l'observation est rasante (cas où l'altitude du porteur du radar est faible), plus le signal retourné par la mer, appelé clutter, s'écarte des statistiques gaussiennes. En effet, des pics d'amplitudes, appelés spikes, donnent lieu à des distributions dites à queue lourde. En d'autres termes plus l'observation est rasante plus le niveau de fouillis de mer perçu est faible mais des spikes se superposent au fouillis. Dans ce contexte, la loi K est couramment utilisée pour modéliser le clutter de mer.

Ces spikes entraînent une augmentation des fausses alarmes. Dans ces conditions, il est nécessaire d'adapter le seuil de détection radar à l'environnement afin de conserver une probabilité de fausses alarmes (PFA) acceptable.

Un problème technique à résoudre est donc de déterminer un seuil de détection, adapté à l'environnement, le plus efficient possible, c'est-à-dire en commettant le moins d'erreurs possible sur la valeur du seuil estimé. En effet :
- Si le seuil est surévalué, la PFA est satisfaisante mais le radar est désensibilisé ;
- Si le seuil est sous-évalué, la PFA est inacceptable.

Plusieurs méthodes de l'art antérieur sont connues pour résoudre ce problème technique.

Une première méthode consiste à majorer forfaitairement le seuil de détection qu'on aurait calculé en présence de bruit thermique seul (perturbation purement Gaussienne). Ce nouveau seuil est appliqué sur l'ensemble de la carte radar. Cela a pour conséquence le maintien de la PFA fixée. Cependant, la probabilité de détection est fortement dégradée comme le prévoit le critère de Neyman-Pearson.

Une autre méthode connue décompose la carte radar en pavés. Pour chaque pavé, la densité de probabilité des interférences (clutter et bruit thermique) est estimée par régression à un modèle paramétrique et le seuil de détection est calculé pour une PFA donnée. Plus exactement, c'est la CCDF (« Complementary Cumulative Distribution Fonction »), ou fonction de répartition complémentaire, qui est estimée. Cette méthode est relativement peu dépendante d'un modèle précis de fouillis. Toutefois elle nécessite un grand nombre d'échantillons d'entrainement par pavé. De ce fait, les inévitables inhomogénéités au sein de chaque pavé dégradent la performance de la méthode en particulier lorsque des cibles ou des objets autres que le fouillis de mer sont présents.

Une troisième méthode pourrait utiliser une modélisation du clutter de mer par une loi *a priori* (la loi K généralement) auquel on ajoute le bruit thermique du récepteur. Afin de limiter le taux de fausses alarmes liées à cette loi, le traitement propose une adaptation locale du seuil de détection en fonction de l'environnement rencontré sur la base du modèle de clutter de mer correspondant. Pour cette modélisation, l'environnement perturbant la détection est caractérisé par une distribution à plusieurs paramètres caractéristiques incluant notamment :
- la puissance moyenne totale du bruit et du clutter ;
- le rapport clutter à bruit, noté RCB ;
- le facteur de forme v de la distribution K.

Un inconvénient de cette approche est notamment que l'estimation des propriétés statistiques peut être biaisée ou avoir une grande variance, par exemple dans certaines régions de RCB.

Les documents suivants dévoilent l'état de la technique pertinent:
- T. E. Gawron et al., "Polish radar technology," IEEE Transactions on Aerospace and Electronic Systems, vol. 27, no. 5, pages 748-783, septembre 1991, DOI: 10.1109/7.97317;
- P. Chen et al, "A new ship detection model based multi-distributions on SAR imagery", Proc. SPIE 7109, Image and Signal Processing for Remote Sensing XIV, 71091L, octobre 2008; DOI: 10.1117/12.800062;
- I. Antipov: "Analysis of sea clutter data", mars 1998, Salisbury South Australia; https:// apps.dtic.mil/dtic/tr/fulltext/u2/a348339.pdf;
- G. Davidson et al: "Analysis of high-resolution land clutter - Nonlinear and non-Gaussian signal processing", IEE Proceedings - Vision, Image and Signal Processing, GB, vol. 151, no. 1, février 2004, pages 86-91, ISSN: 1350-245X, doi: 10.1049/ip-vis:20040303; et
- D. Blacknell, "Comparison of parameter estimators for K-distribution", IEE Proceedings - Radar, Sonar and Navigation, GB, vol. 141, no. 1, février 1994, pages 45-52, ISSN: 1350-2395, DOI: 10.1049/ip-rsn:19949885.

Un but de l'invention est notamment de pallier les inconvénients précédemment exposés de l'art antérieur en déterminant un seuil de PFA acceptable.

A cet effet, l'invention a pour objet un procédé de détermination du seuil de détection d'un radar adapté à un environnement donné, le procédé étant mis en œuvre par ledit radar, le procédé comportant au moins :
- une étape dans laquelle on sélectionne un ensemble de grandeurs statistiques caractérisant ledit environnement, ledit ensemble de grandeurs statistiques comportant N grandeurs statistiques, lesdites grandeurs formant un espace à N dimensions ;
- une étape dans laquelle on définit un ensemble de fonctions, chacune desdites fonctions donnant un seuil de détection intermédiaire fonction de grandeurs statistiques prises dans un sous-ensemble dudit ensemble de grandeurs statistiques ; et
- une étape de combinaison desdits seuils de détection intermédiaires, ledit seuil de détection étant le résultat de ladite combinaison, ladite combinaison étant telle que ledit espace est scindé en partitions de dimensions inférieures ou égales à N avec possibilité de chevauchement des partitions, chaque fonction étant associée à une partition et lorsque deux partitions se chevauchent, le seuil de détection sur la zone de recouvrement est fonction des seuils associés auxdites deux partitions ; et
le nombre de grandeurs statistiques comprises dans ledit ensemble étant strictement supérieur à 2.

Ledit seuil de détection intermédiaire est par exemple constant sur une partition. Le seuil n'est pas nécessairement constant, c'est la fonction qui donne le seuil intermédiaire qui ne change pas. En revanche, la fonction n'est pas nécessairement une fonction constante et dépend des grandeurs statistiques formant le sous-ensemble.

Le seuil de détection dans la zone de recouvrement est par exemple une somme pondérée des seuils associés aux dites deux partitions.

Les grandeurs statistiques caractérisent par exemple du fouillis de mer et du bruit thermique.

Lesdites fonctions donnant lesdits seuils intermédiaires sont par exemple déterminées pour différentes configurations d'environnement.

L'invention a également pour objet un radar configuré pour mettre en œuvre le procédé tel que précédemment décrit.

D'autres caractéristiques et avantages apparaîtront à l'aide de la description qui suit, faite en regard de dessins annexés qui représentent :
[Fig.1] La figure 1, une illustration du clutter de mer en observation rasante ;
[Fig.2] La figure 2, une présentation des étapes mettant en œuvre le procédé selon l'invention ;
[Fig.3] La figure 3, le principe d'un exemple de détection de contraste en distance ;
[Fig.4] La figure 4, une illustration du principe de déduction du seuil de détection selon l'invention.

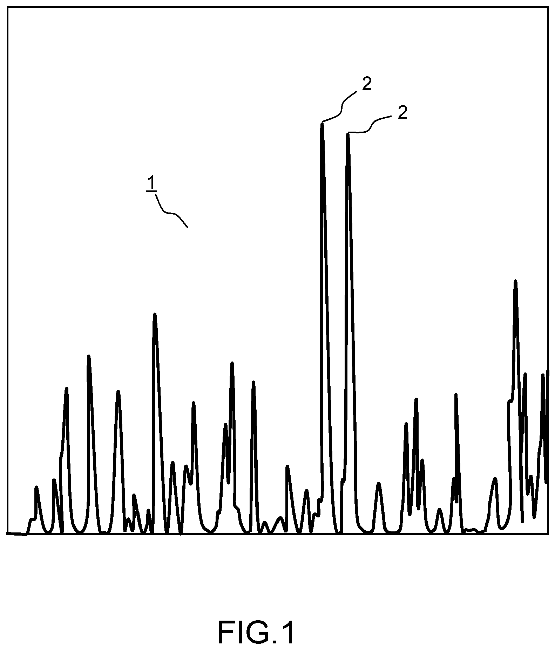

La figure 1 illustre l'allure du signal 1 retourné par la mer (clutter) dans le cas d'une observation radar rasante, le porteur étant à faible altitude. Le clutter comporte des pics d'amplitude 2 (spikes) entraînant une augmentation des fausses alarmes comme exposé précédemment.

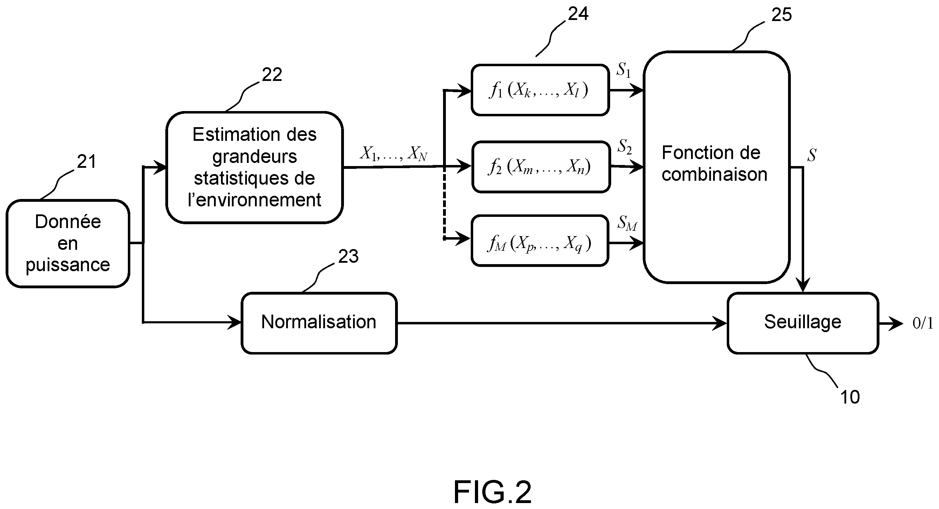

La figure 2 illustre les différentes fonctions de mise en œuvre du procédé selon l'invention. Celui-ci s'appuie sur la troisième méthode de l'art antérieur présentée précédemment. Cependant, il en diffère par le fait que l'on ne cherche nullement à estimer explicitement les paramètres qui caractérisent usuellement la distribution, notamment le facteur de forme v de la distribution K du fouillis. La solution apportée par l'invention est donc différentes des méthodes de caractérisation de la distribution de fouillis telles que celles décrites notamment dans le document de D. Blacknell et R. J. A. Tough, « Parameter Estimation for the K-distribution based on [zlog(z)] », IEE Proceedings - Radar, Sonar and Navigation, Vol. 148, n°6, pp. 309-311, 2001 (document D1). Dans la présente invention, l'objectif est de déduire directement quel est le seuil de détection à placer en fonction de mesures de diverses grandeurs (paramètres) statistiques obtenus facilement avec une population de données d'apprentissage. Sans perte de généralité, on fait l'hypothèse simplificatrice que l'environnement est constitué de fouillis de mer et de bruit thermique, sans présence de phénomènes perturbateurs de type nuages de précipitations ou autres phénomènes. L'invention est basée sur l'exploitation de jeux de données, un nombre d'échantillons limité étant considéré afin de respecter l'homogénéité des échantillons et limiter la puissance de calcul nécessaire.

Les signaux 21 reçus par le radar sont échantillonnés de façon classique, pour un traitement numérique. Pour la détection, on considère la puissance de ces signaux reçus, la puissance d'un échantillon étant classiquement calculée à partir de de ses composantes I et Q. Ce sont ces données de puissance qui vont être prises en compte avec la fonction de seuillage 10 pour confirmer une détection.

Pour aboutir à la fonction de seuillage 10, on commence par une étape 22 dans laquelle on définit un ensemble de grandeurs statistiques caractéristiques de l'environnement. Les grandeurs statistiques choisies sont également fonction des signaux, et donc des données de puissance 21 que l'on s'attend à traiter.

Ainsi, on définit un ensemble de *N* grandeurs statistiques qui permettent de caractériser l'environnement. On note {*Xᵢ*}_{*i=*1*,...,N*} ces *N* grandeurs caractéristiques. Dans le cas de l'invention *N* est strictement supérieur à 2. Certains des paramètres *Xᵢ* peuvent être notamment :
- le rapport clutter à bruit, noté *RCB* ;
- et l'impulsivité des signaux reçus (caractérisant l'impulsivité du mélange de clutter et de bruit thermique), notée *IMP.*

Ces deux paramètres caractérisent l'allure du clutter et donc l'environnement. Dans le cas d'observation rasante l'allure du clutter est telle qu'illustrée par la figure 1, avec un RCB faible et une forte impulsivité caractérisée par les spikes 2.

L'impulsivité peut être exprimée par une grandeur définie selon la relation suivante : $IMP ≜ log \frac{1}{n} {\sum }_{i = 1}^{n} {x}_{i} - \frac{1}{n} {\sum }_{i = 1}^{n} {logx}_{i}$ où *n* désigne le nombre d'échantillons d'apprentissage et *xᵢ* le i^{ème} échantillon ce clutter 2. En d'autres termes, *IMP* est la différence du logarithme de la moyenne arithmétique des échantillons d'apprentissage moins le logarithme de la moyenne géométrique de ces mêmes échantillons d'apprentissage.
Il est connu que cet estimateur *IMP* ou bien celui du document D1 « [zlog(z)] » fournissent une estimation du seuil de détection optimale, proche du critère du Maximum de Vraisemblance » en l'absence de bruit thermique ou si le rapport clutter à bruit est très supérieur à 1 (ou si *RCB >>1*)*.* Mais, il est aussi connu qu'à faible *RCB,* l'estimation est très imprécise. Dans ces conditions, le seuil de détection à placer est donc *= f_{IMP}*(*IMP, RCB),* seuil qu'il est possible d'établir par calcul ou par simulation (hors ligne).

A faible rapport RCB on peut également utiliser les moments statistiques M1, M2, M3 ou encore M4 (moments d'ordre 1, 2, 3 ou encore 4) comme grandeurs statistiques. Dans le document D1, on propose notamment cinq méthodes d'estimation de grandeurs statistiques fondée sur les moments et log-moments afin de quantifier le caractère « impulsif » du clutter de mer. On peut aussi utiliser d'autres grandeurs statistiques déduites de ces moments (Kurtosis, Skewness, etc.). Toutefois, un problème propre à ces estimateurs est leur grande sensibilité à la présence possible de cibles dans la population d'échantillons, entraînant une forte surestimation du seuil. Ces solutions connues ne sont donc pas satisfaisantes.

Selon l'approche dite « par statistique ordonnée » on peut aussi définir comme paramètre statistique (estimateur) le nombre d'échantillons *Q_{λ}* franchissant un ou plusieurs niveaux de puissance *T* = *µλ* où *µ* désigne la moyenne locale des échantillons, plusieurs opérateurs de moyennes pouvant être utililsés (arithmétique ou géométrique notamment). Cet estimateur, beaucoup moins sensible à la présence de cibles, consiste donc à compter, sur un domaine de résolution du radar, le nombre de dépassements par rapport à un niveau de test *T* = *µλ*. Ce test est facilité par une étape 23 où la puissance des échantillons reçus 21 est normalisée par rapport à une moyenne locale, par exemple en utilisant le procédé connu de CA-CFAR (« Cell Average - Contant False Alarm Rate »). On obtient ainsi un jeu d'échantillons normalisés dont la valeur moyenne cible vaut 1.

Ce test de niveau par rapport à une moyenne locale peut être réalisé après un détecteur de contraste de type CA-CFAR mais aussi après tout autre détecteur de contraste connu. Le test revient donc à compter le nombre de contrastes supérieurs à *T*/*µ* = *λ*. Ainsi, une cible dont le niveau dépasse *T* compte pour un dépassement quelle que soit la puissance de la cible, d'où la moindre sensibilité de cet estimateur mentionnée ci-dessus.

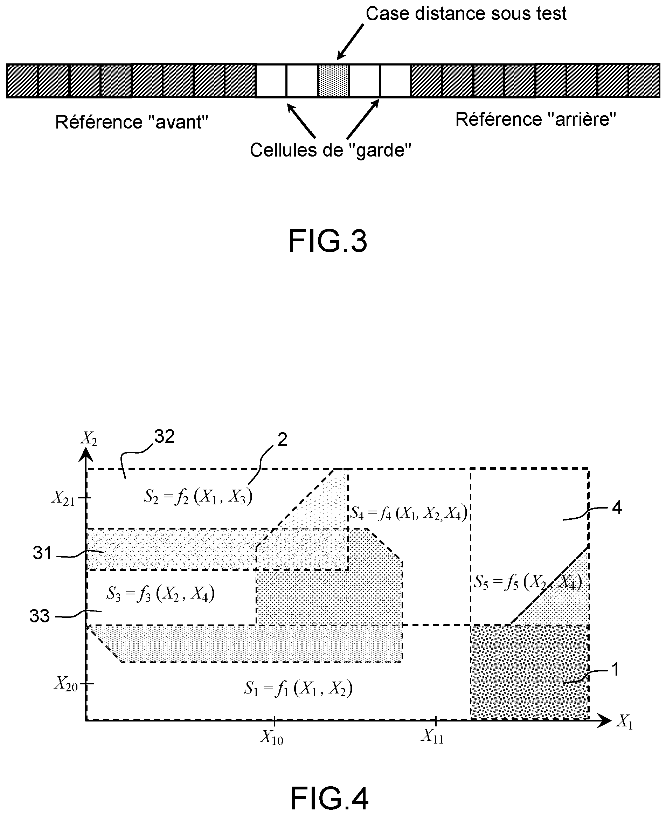

La figure 3 illustre le principe de détection de constraste en distance, de type CA-CFAR. Dans cet exemple, on calcule la moyenne locale *µ* à l'aide des moyennes de référence avant la case distance sous test et après la cellule sous test. Le test consiste à comparer la puissance P_{CUT} de la case sous test par rapport *à T* = *µλ*. Si P_{CUT} *> T,* on compte 1 sinon on compte 0. L'opération est répétée de manière glissante sur l'ensemble des cellules de résolution (cases distance) du domaine traité. Le terme *λ* est idéalement choisi pour que le nombre de dépassements « au repos » sur bruit thermique soit supérieur au nombre maximal de cible susceptibles d'être trouvées dans un intervalle de p cellules de résolution du radar, en pratique de l'ordre de la dizaine. Dans le cas général, on obtient *Q_{λ}* dépassements de la valeur de test *T.*

Selon cette dernière approche, il est possible de déduire le seuil de détection à placer *S = f_{λ}*(*Q_{λ} , RCB*). Une amélioration consiste à ajouter *IMP* comme troisième argument et donc S *= f_{λ,IMP}*(*Q_{λ} , RCB, IMP*). Les fonctions *f_{λ}* ou *f_{λ,IMP}* peuvent être obtenu par calcul ou par simulation (hors ligne).

Les paramètres statistiques présentés ci-dessus ne sont pas limitatifs. D'autres paramètres statistiques peuvent être utilisés pour caractériser l'environnement dans cette étape 22.

Dans une autre étape 24, on définit un ensemble de fonctions {*fⱼ*}_{*j=*1*,...,M*} telles que chaque fonction *fⱼ*({*Y*}*ⱼ*) fournit une estimation plus ou moins précise du seuil de détection, {*Y*}*ⱼ* étant un ensemble de grandeurs statistiques. Ces fonctions *fⱼ* sont par exemple obtenues par simulation. Il n'y a pas nécessairement d'expression analytique de ces fonctions, elles peuvent donc être définies par tabulation. On a l'inclusion suivante : {*Y*}*ⱼ* ⊂ {*X*}, c'est-à-dire que chaque fonction d'estimation n'utilise qu'un sous-ensemble {*Y*}*ⱼ* de l'ensemble total des grandeurs statistiques {*X*}*.* Dans la représentation de la figure 2, la fonction *f*₁ s'applique sur un sous-ensemble {*Xₖ, ... , Xₗ*}*,* la fonction *f*₂ s'applique sur un sous-ensemble {*Xₘ, ... , Xₙ*} et la M^{ième} fonction *f_{M}* s'applique sur un sous-ensemble {*Xₚ, ... , X_{q}*}*.*

Le jeu de fonctions *fⱼ* est choisi de telle sorte que, dans l'ensemble des fonctions *fⱼ*({*Y*}*ⱼ*) , il existe toujours au moins une fonction qui permet d'estimer le seuil s de manière « optimale » (au sens du critère précédent) en chaque point du domaine utile des paramètres d'environnement (grandeurs statistiques).
Il existe donc au moins un seuil *sⱼ = fⱼ*({*Y*}*ⱼ*)*.*

Ces différentes fonctions de l'ensemble {*fⱼ*}_{*j=*1*,...,M*} permettant d'estimer directement le seuil de détection en fonction de certaines grandeurs *Xᵢ*, peuvent être déterminées soit par des méthodes de Monte-Carlo, soit par une méthode déterministe.

Dans une autre étape 25, on définit une fonction de combinaison des fonctions *fⱼ* pour définir le seuil final
Le seuil final S est donc obtenu par une fonction de combinaison C des seuils intermédiaires : $S = C \left({s}_{1},…,\left.{s}_{M}\right|{X}_{1},…,{X}_{N}\right)$ Cette fonction de combinaison sera détaillée par la suite.

Les étapes 22, 24 et 25 sont établies au préalable afin d'être utilisée par la suite pour le traitement de la puissance des échantillons de signaux reçus 21. En d'autres termes, la fonction de seuillage définie à partir de la définition des paramètres d'environnement (étape 22), des fonctions *fⱼ* (étape 24) et de la fonction de combinaison (étape 25) est calculée pour l'ensemble des données d'entrée 21 utilisée au cours de la mission radar, au moins pour une période de mission apte à être caractérisée par les paramètres d'environnement retenus. La fonction de seuillage S est ainsi pré-calculée et elle appliquée dans l'étape de seuillage 10 aux données de puissances 21 des échantillons reçus, après que ces données ont été normalisées 23 comme décrit précédemment.

Pour la fonction de combinaison, le principe de l'invention est d'utiliser plusieurs seuils de détection intermédiaires *sᵢ* déterminés chacun en fonctions de divers paramètres statistiques *Xᵢ* (par les fonctions *fⱼ*) afin de les combiner pour avoir un seuil de détection *S* le plus robuste aux différentes configurations d'environnement qui peuvent être rencontrées.

Une solution possible est de partitionner l'espace des paramètres statistiques *Xᵢ* de manière à affecter un mode de calcul du seuil à chaque partition. Dans un cas très simple des deux estimateurs de seuil *s_{IMP} = f_{IMP}* (*IMP, RCB*) et *s_{λ} = f_{λ}*(*Q_{λ}, RCB*) décrits précédemment, un exemple de fonction de combinaison *C* peut être défini de la manière suivante. $S = C \left({s}_{IMP},\left.{s}_{λ}\right|RCB\right)$ Avec : $\left\{\begin{matrix}C = {f}_{IMP} si RCB > {RCB}_{haut} \\ C = {f}_{λ} si RCB < {RCB}_{bas} \\ C = α \left(RCB\right) {f}_{IMP} + \left(1-α\left(RCB\right)\right) {f}_{λ} sinon\end{matrix}\right.$ où *RCBₕₐᵤₜ* désigne la « frontière » de RCB au-dessus de laquelle le seuil *s_{IMP}* est optimal et *RCB_{bas}* désigne la « frontière » de RCB au-dessus de laquelle le seuil *s_{λ}* est optimal avec une zone de transition (recouvrement) entre les deux « frontières ».
La fonction *α*(*RCB*) est comprise entre 0 et 1 et permet de passer progressivement d'un estimateur à l'autre dans la zone de recouvrement. On peut par exemple utiliser une fonction sigmoïde modifiée de telle sorte qu'elle vaille 0 en *RCB*_{bas} et 1 en *RCB*ₕₐᵤₜ. Des valeurs typiques de RCB limites sont par exemple : *RCB*_{bas} *=* -3 *dB* et *RCB*ₕₐᵤₜ = +6 *dB.*

La figure 4 illustre le partionnement de l'espace des paramètres dans un cas plus élargi, avec quatre fonctions et quatre paramètres. A partir de ce positionnement, on en déduit le seuil de détection. A titre d'exemple, les quatre paramètres d'environnement retenus sont :
- Le rapport clutter à bruit, RCB ;
- L'impulsivité, IMP ;
- Le nombre de dépassement de niveau *Q_{λ}* par exemple pour *λ* = +6 *dB*
- Le rapport du moment statistique d'ordre 2 sur celui d'ordre 1 ;

Pour sélectionner une fonction, on se place dans un espace à N dimensions, N étant le nombre de paramètres d'environnement utilisés. Dans l'exemple de la figure 4, N est égal à 4. L'espace à N dimensions est partitionné en sous-espaces. Selon les valeurs des paramètres *X*₁*, X*₂*, X*₃*, X*₄ on se situe dans une partition donnée correspondant à une fonction *f_{i.}.*

Pour la simplicité de représentation, le partitionnement n'est représenté qu'en dimension 2, à partir de deux grandeurs caractéristiques *X*₁ et *X*₂ (par exemple *X*₁ *=* RCB et *X*₂ = IMP), alors que 4 grandeurs caractéristiques sont utilisées : *X*₁*, X*₂*, X*₃*, X*₄*.* L'espace de partitionnement est donc de dimension 4. Les partitions peuvent être contiguës ou présenter un certain recouvrement. Le nombre de partitions est égal au cardinal *M* de {*fⱼ*}_{*j=*1*,*...,*M*}, correspondant en fait au nombre de fonctions *fᵢ* établies.

Ainsi, à titre d'exemple, pour *X₁* = X₁₀ et *X₂* = X₂₀, le seuil *S* est défini par le seuil *s₁ = f₁ (X₁, X₂)* et pour *X₁* = X₁₁ et *X*₂ = X₂₁, le seuil *S* est défini par le seuil *s₄ = f₄ (X₁, X₂, X₄).*

Chaque partition est associée à une fonction *fⱼ*, mais il est possible que des partitions se chevauchent. A l'intérieur des chevauchements, on peut prévoir une pondération entre les fonctions propres à chaque partition se chevauchant. Ainsi dans la zone de chevauchement 31 entre la partition 32 associée à *f*₂ et la partition 33 associée à *f*₃, on peut prévoir un seuil *s₂₃ =* α *s₂ +* β *s₃,* α et β étant inférieurs à 1 et fonction par exemple des aires respectives des partitions 32, 33. On peut étendre ce principe à un chevauchement plus de deux partitions.

La partition de la figure 4 est préétablie, elle est adaptée à une PFA donnée. L'espace des paramètres d'environnement à N dimensions (N = 4 dans l'exemple de la figure 4) ainsi partitionné est mémorisé dans les moyens de traitement du radar, avec les fonctions *fᵢ* associées. Le stockage de ces éléments de seuillage est par exemple réalisé sous forme de tabulation.

Le seuil final défini par la fonction de combinaison, par exemple selon la partition dans l'espace des paramètres d'environnement, est le seuil de détection recherché. La puissance des signaux reçus est comparée avec ce seuil. En regard de la figure 2, les puissances des échantillons reçus sont par exemple normalisées 23 avant comparaison 10 avec le seuil.

## Revendications

1. Procédé de détermination du seuil de détection d'un radar adapté à un environnement donné, le procédé étant mis en œuvre par ledit radar, le procédé comportant au moins :
- une étape (22) dans laquelle on sélectionne un ensemble de grandeurs statistiques caractérisant ledit environnement, ledit ensemble de grandeurs statistiques comportant N grandeurs statistiques, lesdites grandeurs formant un espace à N dimensions ;
- une étape (24) dans laquelle on définit un ensemble de fonctions, chacune desdites fonctions donnant un seuil de détection intermédiaire fonction de grandeurs statistiques prises dans un sous-ensemble dudit ensemble de grandeurs statistiques ; et
- une étape (25) de combinaison desdits seuils de détection intermédiaires, ledit seuil de détection étant le résultat de ladite combinaison, ladite combinaison étant telle que ledit espace est scindé en partitions (32, 33) de dimensions inférieures ou égales à N avec possibilité de chevauchement des partitions, chaque fonction étant associée à une partition et lorsque deux partitions se chevauchent, le seuil de détection sur la zone de recouvrement (31) est fonction des seuils associés auxdites deux partitions ;
et le nombre de grandeurs statistiques comprises dans ledit ensemble étant strictement supérieur à 2.

2. Procédé selon la revendication 1, **caractérisé en ce que** ledit seuil de détection intermédiaire est constant sur une partition.

3. Procédé selon la revendication 1 ou 2, **caractérisé en ce que** le seuil de détection dans la zone de recouvrement (31) est une somme pondérée des seuils associés aux dites deux partitions.

4. Procédé selon la revendication 1 ou 3, **caractérisé en ce que** ledit ensemble de grandeurs statistiques comporte les grandeurs suivantes :
- l'impulsivité des signaux reçus;
- le rapport signal à bruit ;
- le nombre de dépassements d'un niveau de puissance préétabli.

5. Procédé selon l'une quelconque des revendications précédentes, **caractérisé en ce que** lesdites grandeurs statistiques caractérisent du fouillis de mer et du bruit thermique.

6. Procédé selon l'une quelconque des revendications précédentes, **caractérisé en ce que** lesdites fonctions donnant lesdits seuils intermédiaires sont déterminées pour différentes configurations d'environnement.

7. Procédé selon l'une quelconque des revendications précédentes, caractérisé en ce ledit radar est aéroporté.

8. Radar, configuré pour mettre en œuvre le procédé selon l'une quelconque des revendications précédentes.

## Patentansprüche

1. Verfahren zur Bestimmung der an eine bestimmte Umgebung angepassten Erfassungsschwelle eines Radars, wobei das Verfahren von dem Radar durchgeführt wird, wobei das Verfahren mindestens Folgendes umfasst:
- einen Schritt (22), bei dem eine Anordnung von statistischen Größen ausgewählt wird, die die Umgebung kennzeichnen, wobei die Menge von statistischen Größen N statistische Größen umfasst, wobei die Größen einen Raum mit N Dimensionen bilden;
- einen Schritt (24), bei dem eine Anordnung von Funktionen definiert wird, wobei jede der Funktionen eine Erfassungszwischenschwelle ergibt, die von den statischen Größen abhängt, die in einer Teilmenge der Anordnung von statischen Größen herangenommen werden; und
- einen Schritt (25) der Kombination der Erfassungszwischenschwellen, wobei die Erfassungsschwelle das Ergebnis der Kombination ist, wobei die Kombination derart ist, dass der Raum in Teilungen (32, 33) mit Dimensionen kleiner oder gleich N aufgeteilt wird, mit der Möglichkeit der Überlappung der Teilungen, wobei jede Funktion einer Teilung zugeordnet ist, und wenn zwei Teilungen sich überlappen, die Erfassungsschwelle über dem Bereich der Abdeckung (31) von den Schwellen abhängt, die den zwei Teilungen zugeordnet sind;
und die Anzahl der statistischen Größen, die in der Anordnung enthalten sind, streng größer als 2 ist.

2. Verfahren nach Anspruch 1, **dadurch gekennzeichnet, dass** die Erfassungszwischenschwelle über eine Teilung konstant ist.

3. Verfahren nach Anspruch 1 oder 2, **dadurch gekennzeichnet, dass** die Erfassungsschwelle im Bereich der Abdeckung (31) eine gewichtete Summe der den zwei Teilungen zugeordneten Schwellen ist.

4. Verfahren nach Anspruch 1 oder 3, **dadurch gekennzeichnet, dass** die Anordnung der statistischen Größen die folgenden Größen umfasst:
- die Impulsivität der erhaltenen Signale;
- das Signal-Rausch-Verhältnis;
- die Anzahl der Überschreitungen eines vorab festgelegten Leistungsniveaus.

5. Verfahren nach einem der vorstehenden Ansprüche, **dadurch gekennzeichnet, dass** die statistischen Größen Meeresrauschen und thermisches Rauschen kennzeichnen.

6. Verfahren nach einem der vorstehenden Ansprüche, **dadurch gekennzeichnet, dass** die Funktionen, die die Zwischenschwellen ergeben, für unterschiedliche Umgebungskonfigurationen bestimmt werden.

7. Verfahren nach einem der vorstehenden Ansprüche, **dadurch gekennzeichnet, dass** der Radar luftgetragen ist.

8. Radar, der konfiguriert ist, um das Verfahren nach einem der vorstehenden Ansprüche durchzuführen.

## Claims

1. Method for determining the detection threshold of a radar adapted to a given environment, the method being implemented by said radar, the method comprising at least:
- a step (22) in which a set of statistical quantities characterizing said environment is selected, said set of statistical quantities comprising N statistical quantities, said quantities forming an N-dimensional space;
- a step (24) in which a set of functions is defined, each of said functions giving an intermediate detection threshold as a function of statistical quantities taken from a subset of said set of statistical quantities; and
- a step (25) of combining said intermediate detection thresholds, said detection threshold being the result of said combination, said combination being such that said space is divided into partitions (32, 33) of dimensions less than or equal to N, with the possibility of partition overlap, each function being associated with a partition and, when two partitions overlap, the detection threshold over the overlap area (31) is a function of the thresholds associated with said two partitions;
and the number of statistical quantities comprised in said set being strictly greater than 2.

2. Method according to claim 1, **characterized in that** said intermediate detection threshold is constant across a partition.

3. Method according to claim 1 or 2, **characterized in that** the detection threshold in the overlap area (31) is a weighted sum of the thresholds associated with said two partitions.

4. Method according to claim 1 or 3, **characterized in that** said set of statistical quantities comprises the following quantities:
- the impulsivity of the received signals;
- the signal-to-noise ratio;
- the number of overshoots of a preset power level.

5. Method according to any one of the preceding claims, **characterized in that** said statistical quantities characterize sea clutter and thermal noise.

6. Method according to any one of the preceding claims, **characterized in that** said functions giving said intermediate thresholds are determined for different environment configurations.

7. Method according to any one of the preceding claims, **characterized in that** said radar is airborne.

8. Radar configured to implement the method according to any one of the preceding claims.
